# FASCICULE DE BREVET EUROPEEN

(11) **EP 1 625 968 B1**
(45) Date de publication et mention de la délivrance du brevet: **17.10.2007**
(21) Numéro de dépôt: 04019328.6
(22) Date de dépôt: 14.08.2004
(51) Int. Cl.: B60N 2/28

(54) **Siège auto pour enfant inclinable et pivotant entre une position de voyage et une position d'installation**
Kinderautositz kippbar und drehbar zwischen einer Reise- und einer Einbaustellung
Child car seat tiltable and rotatable between a travel position and an installation position

(43) Date de publication de la demande: 15.02.2006
(73) Titulaire: DOREL FRANCE SA, 49309 Cholet (FR)
(72) Inventeur: Biaud, Richard, 49340 Trementines (FR)
(74) Mandataire: Bioret, Ludovic

(56) Documents cités:
- EP-A- 0 302 607
- EP-A- 0 853 018
- DE-A- 10 104 137
- FR-A- 2 680 734
- FR-A- 2 768 089
- US-A- 4 936 629
- US-A1- 2001 048 237
- US-A1- 2002 195 850

## Description

Le domaine de l'invention est celui de la puériculture. Plus précisément, l'invention concerne les sièges pour enfant destinés à être installés dans un véhicule.

Plus précisément encore, l'invention concerne les sièges auto mobiles de façon à prendre une position d'installation (face à une portière) et une position de voyage (face à la route).

Dans les sièges auto, une des difficultés est l'accessibilité, du fait notamment de l'espace réduit laissé par la portière et le siège du véhicule. Il est généralement peu aisé d'installer l'enfant dans le siège, ou de l'extraire de celui-ci.

Pour faciliter l'installation de l'enfant, il a donc été proposé de rendre pivotant le siège par rapport à une embase ou une structure fixe, le siège étant susceptible d'être déplacé entre deux positions :
- une position d'installation de l'enfant, face à une portière latérale (il y a en général deux positions d'installation, le siège pouvant tourner à gauche ou à droite) ;
- une position de transport ou de voyage face à la route.

Un siège auto de ce type est connu de FR 2680734, qui montre toutes les caractéristiques du préambule de la revendication 1.

L'invention concerne en particulier ce type de sièges pour enfant.

Pour des raisons de sécurité, il est souhaitable que l'embase maintienne le siège en au moins deux positions, en partie basse (au niveau de l'assise) et en partie haute (au voisinage la partie supérieure du dossier). Pour cela, l'embase présente deux portions sensiblement perpendiculaires, l'une reposant sur le siège du véhicule, et recevant l'assise du siège auto pour enfant, et une autre s'étendant sensiblement verticalement, le long du dossier du siège du véhicule. Cette dernière partie comprend dans sa partie supérieure des moyens de solidarisation avec la partie supérieure du dossier du siège pour enfant.

Cette double liaison renforce bien entendu la sécurité, notamment en cas de choc. Cependant, elle introduit certaines difficultés, notamment en ce qui concerne le réglage de la position du siège par rapport à l'embase.

Il est en effet souhaitable, pour le confort de l'enfant, de pouvoir modifier l'inclinaison du siège. Il a ainsi été proposé de faire coulisser le siège par rapport à l'embase. Cette solution est efficace, lorsque l'embase ne coopère qu'avec l'assise du siège.

En revanche, elle ne peut pas être mise en oeuvre dans le cas exposé ci-dessus où la partie supérieure du dossier est également solidarisée à l'embase. En effet, le dossier se déplace également, lors de la rotation de l'ensemble, alors que l'embase reste fixe. Il est donc difficile de les solidariser de façon efficace.

Des solutions ont cependant été envisagées, à l'aide de systèmes de coulisse également prévus en partie supérieure du dossier et/ou de l'embase. Mais ces solutions présentent un inconvénient, outre leur complexité. En effet, il est nécessaire de ramener le siège dans une position d'inclinaison prédéterminée, classiquement complètement relevée, avant de pouvoir déplacer le siège pour le passer de la position de transport à la position d'installation.

Cela est peu pratique, puisqu'il faut, à chaque installation ou désinstallation de l'enfant, redresser le siège, puis le déplacer vers la portière, puis le remettre dans la position de voyage et enfin le remettre dans la position d'inclinaison souhaitée. Cette série d'opérations risque de conduire à une sous-utilisation, dans laquelle le siège sera toujours en position redressée.

En outre, dans le cas où une position intermédiaire est appréciée par l'enfant, il faut à chaque fois rechercher celle-ci parmi toutes les positions possibles à chaque remise en place dans la position de voyage.

Un autre inconvénient des techniques connues est que le réglage de l'inclinaison ne peut se faire que lorsque le siège est en position face à la route alors qu'il serait souvent plus aisé de le faire lors de l'installation de l'enfant de son siège.

L'invention a notamment pour objectif de pallier ces inconvénients de l'art antérieur.

Plus précisément, un objectif de l'invention est de fournir un siège auto pour enfant, qui soit pivotant entre une position de voyage et une position d'installation, quelle que soit sa position d'inclinaison.

Un autre objectif de l'invention est de fournir un tel siège auto pour enfant, dont l'inclinaison peut être modifiée aussi bien dans la position de voyage que dans la position d'installation.

Un autre objectif de l'invention est de fournir un tel siège auto pour enfant, qui soit simple et peu coûteux à fabriquer, et qui soit fiable dans le temps.

Ainsi, un objectif de l'invention est de fournir un tel siège auto pour enfant qui soit relativement peu coûteux, en particulier en ce qui concerne le nombre de pièces et le temps de montage.

Encore un autre objectif de l'invention est de fournir un tel siège auto pour enfant, présentant de bonnes qualités de sécurité, et notamment dont le siège est maintenu par la partie supérieure de son dossier.

L'invention a également pour objectif de fournir un tel siège auto, qui soit simple et ergonomique à manipuler et à régler, et confortable pour l'enfant.

Ces objectifs, ainsi que d'autres qui apparaîtront plus clairement par la suite, sont atteints à l'aide d'un dispositif de siège auto pour enfant, comprenant une embase destinée à être mise en place sur un fauteuil d'un véhicule et prévue pour recevoir un siège, ledit siège étant mobile :
- en rotation dans un plan sensiblement horizontal, de façon à permettre le passage d'une position de voyage, dans laquelle ledit siège est orienté selon l'axe principal dudit véhicule, à une position d'installation d'un enfant, dans laquelle ledit siège est orientée sensiblement face à une portière dudit véhicule ; et
- en inclinaison.

Selon l'invention, ladite embase présente une partie s'étendant sensiblement verticalement de façon à venir en appui contre le dossier dudit fauteuil, et dont la partie supérieure présente une zone de solidarisation avec la partie supérieure du dossier dudit siège, dans ladite position de voyage, ladite inclinaison étant obtenue essentiellement par un mouvement de rotation dudit siège dans un plan sensiblement vertical, autour d'un point fixe appartenant, dans ladite position de voyage, à ladite zone de solidarisation.

Ainsi, la modification de l'inclinaison n'interagit pas, ou très peu, avec la zone de solidarisation. Il est donc possible d'actionner cette dernière (pour solidariser le siège en position de voyage, ou pour désolidariser le siège de la partie supérieure de l'embase de façon à le ramener en position d'installation) quelle que soit la position d'inclinaison.

De même, il est possible de déplacer le siège en rotation dans toutes les positions d'inclinaison, et de modifier l'inclinaison même lorsque le siège se trouve en position d'installation.

Cela est rendu possible notamment du fait que l'inclinaison est obtenue au moins essentiellement par rotation, et que l'axe de rotation se trouve dans la zone de solidarisation, de façon que cette dernière reste en une position sensiblement invariante.

Selon un mode de réalisation avantageux, ledit siège est monté sur une platine unique, assurant seule la mobilité en rotation et en inclinaison.

Ladite platine porte alors avantageusement au moins une zone de guidage définissant sensiblement un arc de cercle, coopérant avec un élément de guidage complémentaire solidaire dudit siège.

Préférentiellement, ladite platine porte au moins une crémaillère, définissant au moins deux positions prédéfinies d'inclinaison dudit siège.

Selon un autre aspect avantageux de l'invention, ladite zone de solidarisation de ladite embase porte au moins un élément de verrouillage coopérant avec au moins un élément d'accrochage monté sur ledit dossier du siège, lorsque ce dernier se trouve dans ladite position de voyage.

De façon alternative, on peut également prévoir que ledit dossier du siège porte au moins un élément de verrouillage coopérant avec au moins un élément d'accrochage monté sur ladite zone de solidarisation de ladite embase, lorsque ledit siège se trouve dans ladite position de voyage.

Selon un mode de réalisation préférentiel, le ou lesdits éléments d'accrochage comprennent au moins une tringle, et en ce que le ou lesdits éléments de verrouillage comprennent au moins un logement et/ou au moins un crochet de réception du ou desdits fils.

De façon avantageuse, le ou lesdits éléments d'accrochage sont solidaires de moyens de rappel tendant à les ramener dans une position de verrouillage.

Préférentiellement, l'élément, embase ou dossier du siège, portant le ou lesdits éléments d'accrochage comprend des moyens de guidage agissant sur le ou lesdits éléments d'accrochage lorsque ledit siège passe de la position d'installation à la position de voyage, et/ou réciproquement.

Lesdits moyens de guidage peuvent avantageusement agir sur le ou lesdits éléments d'accrochage en s'opposant à la force de rappel desdits moyens de rappel, jusqu'à amener le ou lesdits éléments d'accrochage en contact avec le ou lesdits moyens de verrouillage.

De façon préférentielle, lesdits moyens de guidage présentent une largeur suffisante pour coopérer avec le ou lesdits éléments d'accrochage quelle que soit l'inclinaison dudit siège.

Selon une autre caractéristique avantageuse de l'invention, le dispositif comprend des moyens de déverrouillage, permettant de désolidariser le ou lesdits éléments d'accrochage du ou desdits éléments de verrouillage, puis de faire passer le siège de ladite position de voyage à ladite position d'installation.

Notamment, lesdits moyens de déverrouillage comprennent avantageusement au moins une came agissant sur le ou lesdits éléments d'accrochage de façon à les dégager du ou desdits éléments de verrouillage.

De façon préférentielle, lesdits moyens de déverrouillage sont commandés de façon déportée, via au moins un câble de commande. Avantageusement, lesdits moyens de déverrouillage sont commandés par l'un ou l'autre de deux éléments de commande, prévus respectivement sur chacun des côtés dudit siège ou de ladite embase.

L'invention concerne également les sièges enfant équipant les dispositifs tels que décrits ci-dessus, et les embases correspondantes.

D'autres caractéristiques et avantages de l'invention apparaîtront à la lecture de la description suivante d'un mode de réalisation préférentiel, donné à titre de simple exemple illustratif et non-limitatif, et des dessins annexés parmi lesquels :

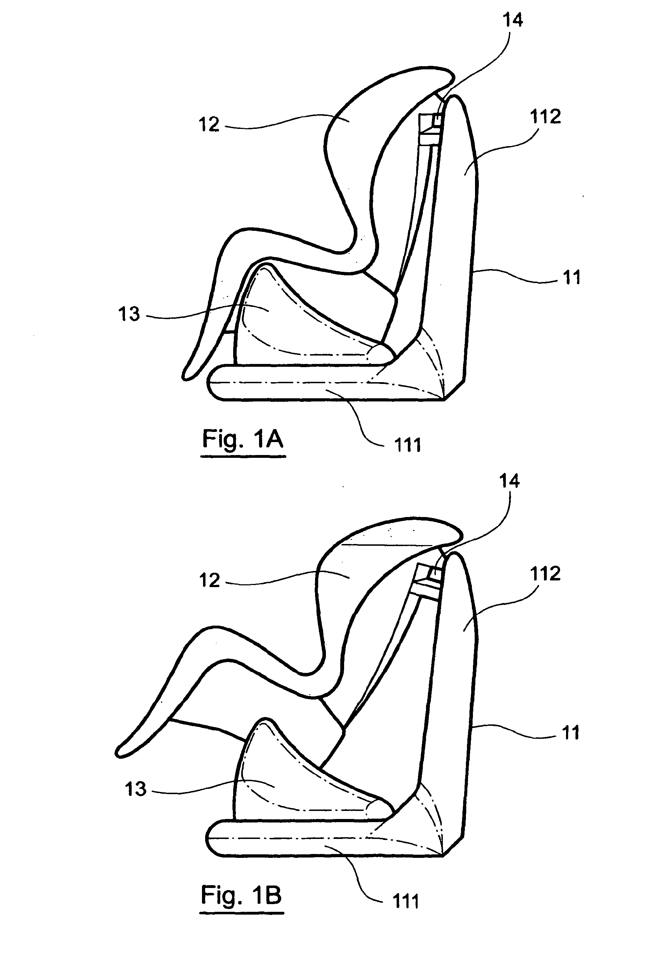

- les figures 1A et 1B illustrent un siège auto pour enfant selon l'invention, en position de voyage, dans deux positions d'inclinaison :
   - figure 1A : siège redressé ;
   - figure 1B : siège incliné au maximum ;
- la figure 2 présente la partie supérieure de l'embase et du siège des figures 1A et 1B, lorsque le siège est en position d'installation ;
- la figure 3 est une vue partielle de l'arrière du siège correspondant à une vue de derrière de la figure 2 ;
- la figure 4 illustre les moyens de verrouillage équipant le siège et l'embase des figures précédentes ;
- la figure 5 est une vue partielle du plateau pivotant portant l'assise.

L'invention concerne donc un siège auto pour enfant réglable en inclinaison, et pivotant, de façon qu'il puisse être amené face à la porte d'un véhicule, pour permettre l'installation ou la désinstallation d'un enfant. Selon l'invention, cette inclinaison est assurée par un mouvement de rotation (ou proche d'une rotation, un léger décalage étant acceptable), l'axe de rotation étant situé dans une zone de solidarisation du dossier du siège avec la partie supérieure de son embase.

Ainsi, cette zone de solidarisation, et plus précisément les éléments de verrouillage qu'elle contient, bougent peu et peuvent donc être actifs et utilisables dans toutes les positions d'inclinaison. Comme cela apparaît plus clairement par la suite, des moyens spécifiques sont prévus pour permettre le déplacement du siège de la position de voyage à la position d'installation, et réciproquement.

On note que l'on a jusqu'ici utilisé indifféremment le terme siège pour l'ensemble, ou dispositif, constitué de l'embase et du fauteuil, ou pour désigner le siège lui-même. Par la suite, le terme « siège » désigne la partie mobile par rapport à l'embase.

Les figures 1A et 1B illustrent un tel dispositif selon l'invention. L'embase 11 comprend une partie sensiblement horizontale 111, venant prendre appui sur l'assise du fauteuil du véhicule, et une partie sensiblement verticale 112, venant prendre appui contre le fauteuil de ce siège du véhicule. Le siège 12 est monté sur l'embase 11, par l'intermédiaire d'un plateau pivotant 13.

Dans sa partie supérieure, le siège 12 comprend des moyens de solidarisation 14, coopérant avec des éléments complémentaires prévus à cet effet sur la partie supérieure de l'embase 112.

Comme déjà indiqué, le siège 12 peut prendre plusieurs positions d'inclinaison, et au moins une position redressée (figure 1A) et une position fortement inclinée (figure 1B). Préférentiellement, plusieurs positions d'inclinaison intermédiaires seront prévues, et indexées sur le plateau pivotant 13.

Cette rotation se fait autour d'un axe s'étendant au niveau de moyens de solidarisation 14, ce qui fait que la position de ces derniers reste sensiblement invariante.

Ainsi, il est possible de solidariser et désolidariser ces éléments 14, pour ramener le siège dans la position d'installation, quelle que soit la position d'inclinaison du siège.

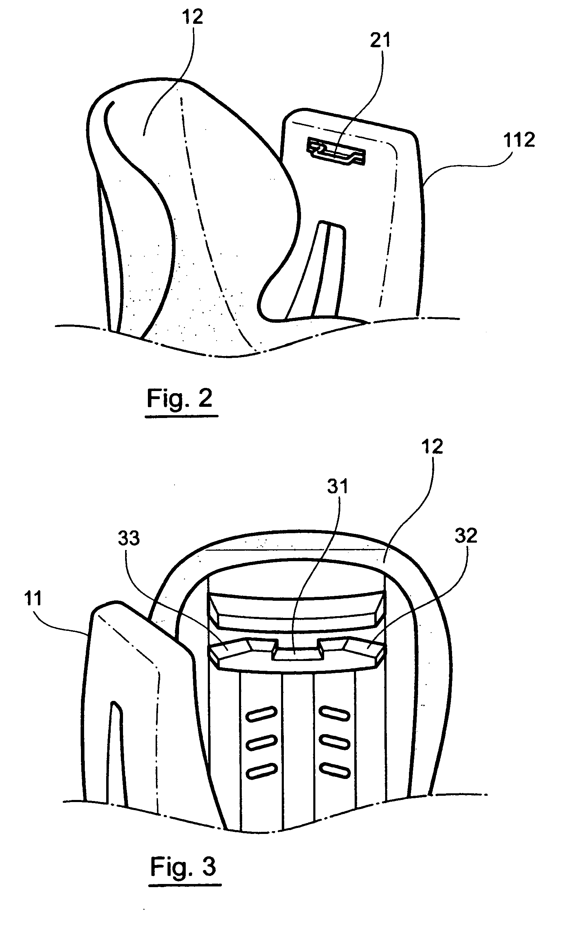

Les figures 2 et 3 illustrent cette position d'installation, respectivement vue de face et vue de derrière.

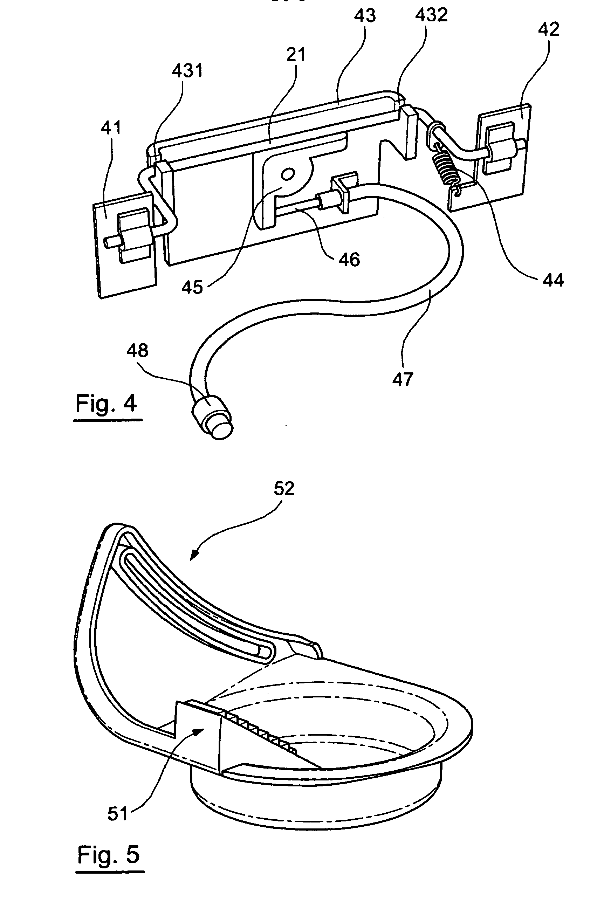

Comme on le note sur la figure 2, l'embase comprend des moyens d'accrochage 21, détaillés en figure 4. Le dossier 12 du siège comprend quant à lui, comme illustré en figure 3, des moyens 31 prévus pour coopérer avec le crochet 21, et des moyens de guidage 32, 33 de ce crochet, prévus pour ramener, ou guider, ce dernier dans la position d'accrochage lorsque le siège est ramené de la position d'installation à la position de voyage, quelle que soit l'inclinaison de ce dernier.

Ces éléments sont illustrés plus précisément en figure 4.

Le crochet 21 (ou tringle) est solidarisé à l'embase à l'aide de deux platines 41, 42. Il est monté de façon à pouvoir être mobile en rotation, pour être accroché ou le libérer d'une pièce de verrouillage 43 solidaire de l'assise.

Dans le mode de réalisation illustré, cette pièce 43 comprend deux encoches 431, 432, dans lesquelles vient s'inscrire la tringle 21.

Bien sûr, un système de verrouillage similaire à une seule encoche centrale, ou à plusieurs tiges coopérant chacune avec une encoche sont envisageables. Plus généralement, de nombreux autres systèmes de verrouillage peuvent être envisagés, en remplacement ou en combinaison.

Un ressort de rappel 44 est prévu sur la tringle 21. Ce ressort de rappel 44 tend à ramener la tringle 21 dans les encoches 431 et 432, de façon que la position par défaut de la tringle soit la position verrouillée. Un autre ressort peut être prévu sur l'autre côté de la tringle.

Pour obtenir le déverrouillage, de façon à faire passer le siège de la position de voyage à la position d'installation, il faut libérer la tringle 21 des encoches 431, 432. Cela peut par exemple être obtenu à l'aide d'une came 45 montée sous la tringle 21, et actionnée avantageusement à distance, par un système à câbles 46.

Ce câble 46 peut être monté dans une gaine 47, et avoir son autre extrémité solidaire d'un poussoir 48, installé par exemple sur l'un des accoudoirs du siège. Préférentiellement, deux systèmes de ce type sont prévus, respectivement sur chacun des accoudoirs.

Lorsqu'on tire sur le câble 46, par l'intermédiaire du poussoir 48, on bascule la came 45, qui pousse alors la tringle 21 hors des encoches 431 et 432. Le siège peut alors être déplacé en rotation.

D'autres éléments d'actionnement peuvent aussi être envisagés.

Par ailleurs, d'autres moyens de verrouillage peuvent être envisagés, pour sécuriser l'ensemble. On peut ainsi par exemple prévoir une pièce venant s'étendre au-dessus de la tringle 21, pour empêcher qu'elle se dégage de façon intempestive des deux encoches 431, 432.

On peut également remplacer les encoches 431 et 432, ou au moins l'une d'entre elles, par un élément verrouillant, présentant un crochet ou une mâchoire maintenant la tringle 21. L'ouverture, ou la libération, de cet élément verrouillant peut remplacer la came pour permettre le passage en position d'installation, par exemple avec un mécanisme similaire par câble.

Lorsque l'on ramène le siège 12 de la position d'installation à la position de voyage, la partie supérieure du dossier rentre en contact avec la tringle 21 (ramenée vers le bas par l'intermédiaire du ressort de rappel 44), par l'intermédiaire de la portion 32 ou 33, qui présente une partie inclinée, puis de relever progressivement cette tringle (en s'opposant à la force de rappel du ressort).

Lorsque le siège se retrouve dans la position exacte de voyage, la tringle 21 vient se placer automatiquement (toujours sous l'effet du ressort de rappel 44) dans les encoches 431 et 432. Le siège est ainsi automatiquement verrouillé sans qu'aucune manipulation n'ait été nécessaire. On dispose ainsi d'un système simple, sûr et efficace.

On notera que la tringle pourrait également être montée sur le siège, et les moyens de verrouillage sur le siège.

Sur la figure 5, on a représenté une vue partielle du plateau pivotant du siège préalablement décrit.

Ce plateau comprend une crémaillère 51, permettant d'indexer une série de positions d'inclinaison du siège par rapport à l'embase. Le plateau comprend également, de chaque côté de la crémaillère, deux éléments de guidage 52 (un seul étant représenté, pour laisser apparaître la crémaillère 51), définissant une rampe d'inclinaison en arc de cercle, dans laquelle peut coulisser un élément complémentaire de guidage monté sur le siège.

Des moyens de verrouillage et de déverrouillage de l'inclinaison (non représentés) sont prévus. Ils peuvent par exemple agir classiquement sur la crémaillère 51.

On notera qu'avec un tel système, il est possible de modifier l'inclinaison du siège aussi bien lorsqu'il est dans la position de voyage que dans la position d'installation. En effet, seuls les éléments illustrés en figure 5 participent à cette inclinaison.

La modification de l'inclinaison en position d'installation ne perturbe pas le verrouillage, lorsque le siège est ramené en position de voyage, puisque la rotation se fait autour d'un axe coïncidant sensiblement avec la zone de solidarisation. On notera que les portions 32 et 33 de rattrapage de la tringle 21 peuvent également servir à compenser un léger déplacement dû à une modification de l'inclinaison.

## Revendications

1. Dispositif de siège auto pour enfant, comprenant une embase destinée à être mise en place sur un fauteuil d'un véhicule et prévue pour recevoir un siège, ledit siège étant mobile :
- en rotation dans un plan sensiblement horizontal, de façon à permettre le passage d'une position de voyage, dans laquelle ledit siège est orienté selon l'axe principal dudit véhicule, à une position d'installation d'un enfant, dans laquelle ledit siège est orientée sensiblement face à une portière dudit véhicule ; et
- en inclinaison,
**caractérisé en ce que** ladite embase présente une partie s'étendant sensiblement verticalement de façon à venir en appui contre le dossier dudit fauteuil, et dont la partie supérieure présente une zone de solidarisation avec la partie supérieure du dossier dudit siège, dans ladite position de voyage,
ladite inclinaison étant obtenue essentiellement par un mouvement de rotation dudit siège dans un plan sensiblement vertical, autour d'un point fixe appartenant, dans ladite position de voyage, à ladite zone de solidarisation.

2. Dispositif selon la revendication 1, **caractérisé en ce que** ledit siège est monté sur une platine unique, assurant seule la mobilité en rotation et en inclinaison.

3. Dispositif selon la revendication 2, **caractérisé en ce que** ladite platine porte au moins une zone de guidage définissant sensiblement un arc de cercle, coopérant avec un élément de guidage complémentaire solidaire dudit siège.

4. Dispositif selon l'une quelconque des revendications 2 et 3, **caractérisé en ce que** ladite platine porte au moins une crémaillère, définissant au moins deux positions prédéfinies d'inclinaison dudit siège.

5. Dispositif selon l'une quelconque des revendications 1 à 4, **caractérisé en ce que** ladite zone de solidarisation de ladite embase porte au moins un élément de verrouillage coopérant avec au moins un élément d'accrochage monté sur ledit dossier du siège, lorsque ce dernier se trouve dans ladite position de voyage.

6. Dispositif selon l'une quelconque des revendications 1 à 4, **caractérisé en ce que** ledit dossier du siège porte au moins un élément de verrouillage coopérant avec au moins un élément d'accrochage monté sur ladite zone de solidarisation de ladite embase, lorsque ledit siège se trouve dans ladite position de voyage.

7. Dispositif selon l'une quelconque des revendications 5 et 6, **caractérisé en ce que** le ou lesdits éléments d'accrochage comprennent au moins une tringle, et **en ce que** le ou lesdits éléments de verrouillage comprennent au moins un logement et/ou au moins un crochet de réception du ou desdits fils.

8. Dispositif selon l'une quelconque des revendications 5 à 7, **caractérisé en ce que** le ou lesdits éléments d'accrochage sont solidaires de moyens de rappel tendant à les ramener dans une position de verrouillage.

9. Dispositif selon l'une quelconque des revendications 5 à 8, **caractérisé en ce que** l'élément, embase ou dossier du siège, portant le ou lesdits éléments d'accrochage comprend des moyens de guidage agissant sur le ou lesdits éléments d'accrochage lorsque ledit siège passe de la position d'installation à la position de voyage, et/ou réciproquement.

10. Dispositif selon les revendications 8 et 9, **caractérisé en ce que** lesdits moyens de guidage agissent sur le ou lesdits éléments d'accrochage en s'opposant à la force de rappel desdits moyens de rappel, jusqu'à amener le ou lesdits éléments d'accrochage en contact avec le ou lesdits moyens de verrouillage.

11. Dispositif selon l'une quelconque des revendications 9 et 10, **caractérisé en ce que** lesdits moyens de guidage présentent une largeur suffisante pour coopérer avec le ou lesdits éléments d'accrochage quelle que soit l'inclinaison dudit siège.

12. Dispositif selon l'une quelconque des revendications 5 à 11, **caractérisé en ce qu'**il comprend des moyens de déverrouillage, permettant de désolidariser le ou lesdits éléments d'accrochage du ou desdits éléments de verrouillage, puis de faire passer le siège de ladite position de voyage à ladite position d'installation.

13. Dispositif selon la revendication 12, **caractérisé en ce que** lesdits moyens de déverrouillage comprennent au moins une came agissant sur le ou lesdits éléments d'accrochage de façon à les dégager du ou desdits éléments de verrouillage.

14. Dispositif selon l'une quelconque des revendications 12 et 13, **caractérisé en ce que** lesdits moyens de déverrouillage sont commandés de façon déportée, via au moins un câble de commande.

15. Dispositif selon l'une quelconque des revendications 12 à 14, **caractérisé en ce que** lesdits moyens de déverrouillage sont commandés par l'un ou l'autre de deux éléments de commande, prévus respectivement sur chacun des côtés dudit siège ou de ladite embase.

16. Siège enfant équipant un dispositif selon l'une quelconque des revendications 1 à 15.

17. Embase pour dispositif selon l'une quelconque des revendications 1 à 15.

## Claims

1. Child car seat device comprising a base intended to be fitted to a car seat and designed to accept a seat, said seat being movable:
- in rotation in a substantially horizontal plane, so as to allow the movement from a travelling position, in which said seat is orientated according to the principal axis of said vehicle, to a position for installing a child, in which said seat is turned substantially facing a door of said vehicle; and
- in inclination,
**characterised in that** said base has a part extending substantially vertically so as to lean against the backrest of said car seat, and whose upper part has a connection zone with the upper part of the backrest of said seat, in said travelling position,
said inclination being obtained essentially by rotating said seat in a substantially vertical plane, about a fixed point belonging, in said travelling position, to said connection zone.

2. Device according to claim 1, **characterised in that** said seat is assembled on a single plate, itself ensuring both the mobility in rotation and inclination.

3. Device according to claim 2, **characterised in that** said plate bears at least one guiding zone substantially defining an arc of circle, collaborating with a complementary guiding element connected to said seat.

4. Device according to either of claims 2 and 3, **characterised in that** said plate bears at least a rack, defining at least two pre-set positions of inclination of said seat.

5. Device according to any of claims 1 to 4, **characterised in that** said connection zone of said base bears at least a locking element collaborating with at least an anchorage element assembled on said backrest of the seat, when the latter is in said travelling position.

6. Device according to any of claims 1 to 4, **characterised in that** said backrest of the seat bears at least a locking element collaborating with at least an anchorage element assembled on said connection zone of said base, when said seat is in said travelling position.

7. Device according to either of claims 5 and 6, **characterised in that** said anchorage element(s) comprise at least a rod, and **in that** said locking element(s) comprise at least a housing and/or at least a catching hook of said cable(s).

8. Device according to any of claims 5 to 7, **characterised in that** said anchorage element(s) are connected to return means with the tendency of returning them to the locking position.

9. Device according to any of claims 5 to 8, **characterised in that** the element, base or backrest of the seat, bearing the anchorage element(s) comprises means for guiding acting on said anchorage element(s) when said seat moves from the installing position to the travelling position, and/or vice versa.

10. Device according to claims 8 and 9, **characterised in that** said means for guiding act on said anchorage element(s) by opposing the restoring force of said return means, until bringing said anchorage element(s) into contact with said means for locking.

11. Device according to either of claims 9 and 10, **characterised in that** said means for guiding have a width sufficient to collaborate with said anchorage element(s) irrespective of the inclination of said seat.

12. Device according to any of claims 5 to 11, **characterised in that** it comprises means for unlocking, allowing to positively disconnect said anchorage element(s) from said locking element(s), then to move the seat from said travelling position to said installing position.

13. Device according to claim 12, **characterised in that** said means for locking comprise at least a cam acting on said anchorage element(s) so as to disengage them from said locking element(s).

14. Device according to either of claims 12 and 13, **characterised in that** said means for unlocking are controlled in an off-set manner, by means of a control cable.

15. Device according to any of claims 12 to 14, **characterised in that** said means for unlocking are controlled by one or other of the two control elements, respectively fitted on each of the sides of said seat or of said base.

16. Child seat equipping a device according to any of claims 1 to 15.

17. Base for device according to any of claims 1 to 15.

## Patentansprüche

1. Autositz für Kinder mit einem Grundteil, der auf einem Fahrzeugsitz angebracht wird und einen Sitz aufnimmt, der wie folgt beweglich ist:
- der Sitz ist drehbar in einer in etwa horizontalen Ebene, um einen Übergang von einer Reiseposition, bei der dieser Sitz nach der Hauptachse des Fahrzeugs ausgerichtet ist in eine Position zum Hineinsetzen eines Kindes, bei der dieser Sitz in etwa zu einer Tür des Fahrzeuges hin gerichtet ist und,
- der Sitz lässt sich neigen,
**dadurch gekennzeichnet, dass** das Grundteil einen Teil aufweist, der sich in etwa vertikal erstreckt, so dass es sich an die Lehne des Fahrzeugsitzes abstützt, wobei der obere Teil dieses Grundteils einen zusammenliegenden Bereich aufweist, der in der Reiseposition mit dem oberen Teil der Lehne des Fahrzeugsitzes zusammen liegt,
wobei die Neigung im Wesentlichen durch eine Drehbewegung des Sitzes in einer in etwa vertikalen Ebene um einen festen Punkt erreicht wird, der in der besagten Reiseposition zu dem zusammenliegenden Bereich gehört.

2. Vorrichtung nach Anspruch 1, **dadurch gekennzeichnet, dass** der besagte Sitz auf einer einzigen Grundplatte angebracht ist, die alleine die Dreh- und Neigungsbewegung gewährleistet.

3. Vorrichtung nach Anspruch 2, **dadurch gekennzeichnet, dass** die besagte Grundplatte mindestens einen Führungsbereich aufweist, der in etwa einen Kreisbogen bildet und mit einem zusätzlichen, mit dem Sitz verbundenen Führungselement zusammenwirkt.

4. Vorrichtung nach einem der Ansprüche 2 oder 3, **dadurch gekennzeichnet, dass** die Grundplatte mindestens eine Zahnstange aufweist, die mindestens zwei vorgegebene Neigungspositionen des besagten Sitzes bestimmt.

5. Vorrichtung nach einem der Ansprüche 1 bis 4, **dadurch gekennzeichnet, dass** der zusammenliegende Bereich des Grundteils mindestens ein Verriegelungselement trägt, das mit mindestens einem an der Rücklehne des Sitzes angebrachten Element zum Einhaken zusammenwirkt, wenn sich der Sitz in der Reiseposition befindet.

6. Vorrichtung nach einem der Ansprüche 1 bis 4, **dadurch gekennzeichnet, dass** die Rücklehne des Sitzes mindestens ein Verriegelungselement trägt, das mit mindestens einem Element zum Einhaken zusammenwirkt, welches an dem zusammenliegenden Bereich des Grundteils angebracht ist, wenn sich der Sitz in der Reiseposition befindet.

7. Vorrichtung nach einem der Ansprüche 5 oder 6, **dadurch gekennzeichnet, dass** das (die) Element(e) zum Einhaken mindestens eine Stange aufweist (aufweisen) und, dass die besagten Verriegelungselemente mindestens eine Aussparung und/oder einen Haken zum Aufnehmen des Seiles bzw. der Seile aufweisen.

8. Vorrichtung nach einem der Ansprüche 5 bis 7, **dadurch gekennzeichnet, dass** das (die) Element(e) zum Einhaken mit Rückholmitteln verbunden sind, die bestrebt sind, das (die) Element(e) zum Einhaken in eine Verriegelungsposition zurückzuführen.

9. Vorrichtung nach einem der Ansprüche 5 bis 8, **dadurch gekennzeichnet, dass** das Element, Grundteil oder Rücklehne des Sitzes, welches das (die) Element(e) zum Einhaken trägt, über Führungsmittel verfügt, die auf das Element zum Einhaken bzw. auf die Elemente zum Einhaken wirken, wenn der Sitz von der Position zum Hineinsetzen des Kindes in die Reiseposition übergeht und/oder umgekehrt.

10. Vorrichtung nach einem der Ansprüche 8 oder 9, **dadurch gekennzeichnet, dass** die besagten Führungsmittel auf das (die) Element(e) zum Einhaken wirken, indem sie gegen die Rückholkraft der besagten Rückholmittel arbeiten, bis das (die) Element(e) zum Einhaken in Berührung mit dem (den) Verriegelungselement(en) gebracht wird (werden).

11. Vorrichtung nach einem der Ansprüche 9 oder 10, **dadurch gekennzeichnet, dass** die Führungsmittel breit genug sind, um, unabhängig von der Neigung des Kindersitzes, mit dem (den) Element(en) zum Einhaken zusammenzuwirken.

12. Vorrichtung nach einem der Ansprüche 5 bis 11, **dadurch gekennzeichnet, dass** sie über Entriegelungsmittel verfügt, die es ermöglichen, das (die) Element(e) zum Einhaken von dem (den) Verriegelungselement(en) zu trennen, um dann den Sitz von der Reiseposition in die Position zum Hineinsetzen des Kindes zu drehen.

13. Vorrichtung nach Anspruch 12, **dadurch gekennzeichnet, dass** die Entriegelungsmittel mindestens über einen Nocken verfügen, der derart auf das (die) Element(e) zum Einhaken wirkt, dass es (sie) von dem (den) Verriegelungselement(en) getrennt wird (werden).

14. Vorrichtung nach einem der Ansprüche 12 oder 13, **dadurch gekennzeichnet, dass** die Entriegelungsmittel versetzt über mindestens ein Steuerseil gesteuert werden.

15. Vorrichtung nach einem der Ansprüche 12 bis 14, **dadurch gekennzeichnet, dass** die Entriegelungsmittel von dem einen oder dem anderen der jeweils auf jeder Seite des besagten Kindersitzes oder des besagten Grundteils vorgesehenen Steuerungselements gesteuert werden.

16. Kindersitz, mit dem eine Vorrichtung nach einem der Ansprüche 1 bis 15 ausgestattet ist.

17. Grundteil für eine Vorrichtung nach einem der Ansprüche 1 bis 15.
